(19) Europäisches Patentamt / European Patent Office / Office européen des brevets

(11) **EP 2 632 875 B1**

(12) **EUROPÄISCHE PATENTSCHRIFT**

(45) Veröffentlichungstag und Bekanntmachung des Hinweises auf die Patenterteilung:
**06.12.2017   Patentblatt 2017/49**

(51) Int Cl.:
*C04B 37/00* (2006.01)   *B23K 35/32* (2006.01)
*B23K 1/00* (2006.01)   *B23K 1/008* (2006.01)
*B23K 1/19* (2006.01)   *B23K 35/02* (2006.01)
*G01L 9/00* (2006.01)

(21) Anmeldenummer: **11779613.6**

(22) Anmeldetag: **28.10.2011**

(86) Internationale Anmeldenummer:
**PCT/EP2011/068943**

(87) Internationale Veröffentlichungsnummer:
**WO 2012/055989 (03.05.2012 Gazette 2012/18)**

(54) **VERFAHREN ZUM HERSTELLEN EINER VERBINDUNG ZWISCHEN ZWEI KERAMIKTEILEN, INSBESONDERE VON TEILEN EINES DRUCKSENSORS UND EIN KERAMISCHER DRUCKSENSOR**

METHOD FOR PRODUCING A CONNECTION BETWEEN TWO CERAMIC PARTS, IN PARTICULAR PARTS OF A PRESSURE SENSOR AND A CERAMIC PRESSURE SENSOR

PROCÉDÉ DE RÉALISATION D'UN ASSEMBLAGE ENTRE DEUX PIÈCES EN CÉRAMIQUE, EN PARTICULIER DES PIÈCES D'UN CAPTEUR DE PRESSION ET CAPTEUR DE PRESSION CÉRAMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.10.2010   DE 102010043119**

(43) Veröffentlichungstag der Anmeldung:
**04.09.2013   Patentblatt 2013/36**

(73) Patentinhaber: **Endress+Hauser GmbH+Co. KG 79689 Maulburg (DE)**

(72) Erfinder:
• **ROßBERG, Andreas**
  **79713 Bad Säckingen (DE)**
• **PHILIPPS, Michael**
  **79539 Lörrach (DE)**

• **HEGNER, Frank**
  **79540 Lörrach (DE)**
• **DREWES, Ulfert**
  **79379 Müllheim (DE)**
• **MÜLLER, Jörg**
  **21073 Hamburg (DE)**
• **DOMS, Marco**
  **55131 Mainz (DE)**

(74) Vertreter: **Andres, Angelika Maria Endress+Hauser(DE)Holding, Patserve, Colmarer Strasse 6 79576 Weil am Rhein (DE)**

(56) Entgegenhaltungen:
**WO-A1-2011/072959     FR-A1- 2 751 640
US-A- 5 351 938**

EP 2 632 875 B1

**Beschreibung**

Die vorliegende Erfindung betrifft ein Verfahren zum Herstellen einer Verbindung zwischen zwei Keramikteilen, insbesondere von Teilen eines Drucksensors und ein keramisches Produkt, insbesondere einen keramischen Drucksensor.

Keramische Drucksensoren umfassen einen Grundkörper und eine Messmembran, wobei die Messmembran mittels eines Aktivhartlots gefügt ist. Ein geeignetes Aktivhartlot zum Fügen von Keramteilen aus Korund ist beispielsweise eine Zr-Ni-Ti-Legierung, da diese von ihrem Wärmeausdehnungskoeffizienten mit Korund kompatibel ist.

Die Offenlegungsschrift FR 2 751 640 A1 offenbart ein Verfahren zum Fügen zweier Keramikkomponenten mit einem Aktivhartlot, welches MG und Au, Pd oder Pt enthält, wobei dasAktivhartlot durch Sputtern bereitgestellt werden kann.

Das Patent US 5 351 938 offenbart eine Vorrichtung zum Herstellen von Folien eines Zr Ni Ti Aktivhartlots, welche zum Fügen von Keramik geeignet sind.

Im Europäischen Patent EP 0 490 807 B1 ist ein Zr-Ni-Ti-Aktivhartlot offenbart. Die Patentschrift EP 0 558 874 B1 offenbart ein Verfahren zum Herstellen von Ringen aus einem solchen Aktivhartlot, Ringe aus Aktivhartlot werden zum Verbinden von Messmembran und den Grundkörper als Abstandhalter zwischen die beiden Teile gelegt, und in einem Hochvakuumlötprozess aufgeschmolzen, wodurch eine druckdichte und hochfeste ringförmige Verbindung zwischen den beiden Keramikteilen entsteht. Eine alternative zum Aufbringen des Lots in Form von vorgefertigten Ringen besteht darin, das Aktivhartlot in einem Siebdruckverfahren bereitzustellen. Eine siebdruckfähige Paste des Aktivhartlots und ein Verfahren zu deren Herstellung ist in der Offenlegungsschrift EP 0 988 919 A1 offenbart.

Die Ringe lassen sich jedoch nur in einer Mindeststärke von etwa 30 $\mu$m in reproduzierbarer Qualität herstellen und auch die siebdruckfähige Paste weist Körnungen auf die im Ergebnis zu Fügestellen mit einer Mindeststärke von etwa 30 $\mu$m zwischen den Keramikteilen führen.

Aus dem Wunsch zur Miniaturisierung von Drucksensoren folgt indirekt der Bedarf nach einer dünneren Fügestelle, da - beispielsweise bei einem keramischen Drucksensor mit einem kapazitiven Wandler - die Miniaturisierung zu einer Verkleinerung der Elektrodenflächen des kapazitiven Wandlers führt, die dann durch eine Verringerung des Abstands zu kompensieren ist.

Es ist daher die Aufgabe der vorliegenden Erfindung, ein Verfahren bereitzustellen, welches die Nachteile des Stands der Technik überwindet.

Die Aufgabe wird erfindungsgemäß gelöst durch das Verfahren gemäß Patentanspruch 1 und den keramischen Drucksensor gemäß Patentanspruch 8.

Das erfindungsgemäße Verfahren zum Herstellen einer Verbindung zwischen zwei Oberflächen oder Oberflächenabschnitten zweier Keramikteile umfasst:

Bereitstellen eines ersten Keramikteils und eines zweiten Keramikteils;

Bereitstellen eines Aktivhartlotmaterials auf zumindest einem Oberflächenabschnitt zumindest eines der Keramikteile;
und

Erhitzen das Aktivhartlots in einem Vakuumlötprozess,

wobei das gesamte Aktivhartlotmaterial zum Verbinden des ersten und des zweiten Keramikteils in der Weise bereitgestellt wird, dass zumindest ein Oberflächenabschnitt zumindest eines der Keramikteile, vorzugsweise beider Keramikteile, mittels einer Gasphasenabscheidung mit der Legierung des Aktivhartlots und/oder deren Komponenten beschichtet wird,

wobei die Gasphasenabscheidung ein Sputterverfahren bzw. Kathodenzerstäubungsverfahren, um die Komponenten des Aktivhartlots in die Gasphase zu überführen,

wobei das Aktivhartlot mehrere Komponenten aufweist, wobei in dem Sputterverfahren ein Sputtertarget verwendet wird, welches die Komponenten des Aktivhartlots enthält,

wobei das Aktivhartlot eine Sollzusammensetzung aufweist, in welcher Komponenten $K_i$ des Aktivhartlots in einem Gewichtsprozentanteil $c_i$ vorliegen, und bei der die Differenz zwischen dem Wärmeausdehnungskoeffizienten des Aktivhartlots und dem Wärmeausdehnungskoeffizienten des Werkstoffs der Keramikteile, insbesondere bei gegebener Festigkeit der Fügestelle, ein Minimum aufweist, wobei das Sputtertarget die Komponenten des Aktivhartlots in Mengenverhältnissen $c_{i,\,Target}$ aufweist, die von der Sollzusammensetzung $c_{i,\,Soll}$ relative Abweichungen

$$d_i := |(c_{i,\,Target} - c_{i,\,Soll}) / c_{i,\,Soll}|$$

der einzelnen Komponenten aufweisen für die gilt: $d_i < 4\%$, vorzugsweise nicht mehr als 2% und besonders bevorzugt nicht mehr als 1%, und wobei die keramischen Teile Korund aufweisen, wobei das Aktivhartlot eine Zr-Ni-Ti-Legierung umfasst,

wobei die Komponenten des Aktivhartlots eine Sollzusammensetzung aufweisen, für die gilt: $61 < c_{Zr} <$

63,5, 21,5 < $c_{Ni}$ < 24 und 14,5 < $c_{Ti}$ <15,5. In einer Weiterbildung der Erfindung wird der zumindest eine Oberflächenabschnitt des zumindest einen Keramikteils, mittels einer Gasphasenabscheidung zunächst nur mit einer aktiven Komponente des Aktivhartlots beschichtet wird. Hierbei wird die eine aktive Komponente einerseits beispielsweise in einer Stärke aufgetragen, die nicht mehr als 5%, vorzugsweise nicht mehr als 2% und besonders bevorzugt nicht mehr als 1% der Gesamtstärke des Aktivhartlots zwischen dem ersten und dem zweiten Keramikteil beträgt. Andererseits wird die eine aktive Komponente in einer Stärke aufgetragen wird, die beispielsweise nicht weniger als 0,1%, vorzugsweise nicht weniger als 0,2% der Gesamtstärke des Aktivhartlots zwischen dem ersten und dem zweiten Keramikteil beträgt.

Gemäß einer Ausgestaltung der Erfindung weist die Beschichtung mit der einen aktiven Komponente einerseits eine Stärke von beispielsweise nicht weniger als 10 nm, insbesondere nicht weniger als 40 nm, und bevorzugt nicht weniger als 80 nm auf, wobei andererseits die Beschichtung mit der einen aktiven Komponente eine Stärke von beispielsweise nicht mehr als 400 nm, insbesondere nicht mehr als 300 nm, und bevorzugt nicht mehr als 200 nm aufweist.

Gemäß einer Weiterbildung der Erfindung wird die eine aktive Komponente zur Gasphasenabscheidung mittels eines Sputterverfahrens in die Gasphase gebracht wird, wobei in dem Sputterverfahren ein Sputtertarget verwendet wird, welches nur die eine aktive Komponente enthält.

Erfindungsgemäß umfasst das Aktivhartlot eine Zr-Ni-Ti-Legierung, wobei die mindestens eine aktive Komponente, insbesondere Titan oder Zirkon umfasst.

Gemäß einer Weiterbildung der Erfindung werden das erste Keramikteil und das zweite Keramikteil entlang einer ringförmigen Fügestelle, welche einen Hohlraum zwischen dem ersten Keramikteil und dem zweiten Keramikteil umschließt, druckdicht verbunden, wobei das Aktivhartlot auf mindestens einem ringförmigen Oberflächenabschnitt eines Keramikteils abgeschieden wird, wobei ein von dem ringförmigen Oberflächenabschnitt umschlossener Bereich während des Abscheidens des Aktivhartlots maskiert ist.

In einer Weiterbildung der Erfindung ist der Lötprozess ein Vakuumlötprozess oder ein Lötprozess unter Schutzgas.

Der erfindungsgemäße keramische Drucksensor, welcher insbesondere nach dem erfindungsgemäßen Verfahren erhältlich ist, umfasst ein erstes keramisches Teil und ein zweites keramisches Teil, wobei das erste und das zweite keramische Teil mittels einer Fügestelle gefügt sind, die ein Aktivhartlot aufweist, wobei das Aktivhartlot in der Fügestelle eine Stärke von nicht mehr als 20 μm, insbesondere nicht mehr als 17 μm, bevorzugt nicht mehr als 14 μm und besonders bevorzugt nicht mehr als 12 μm aufweist, wobei die keramischen Teile Korund aufweisen, wobei das Aktivhartlot eine Zr-Ni-Ti-Legierung umfasst, wobei das erste keramische Teil einen Grundkörper des Drucksensors umfasst, wobei das zweite keramische Teil die Messmembran des Drucksensors umfasst, und wobei die Messmembran mit dem Grundkörper entlang einer ringförmigen Fügestelle, welche das Aktivhartlot aufweist, druckdicht verbunden ist.

Die Erfindung wird nun anhand des in der Zeichnung dargestellten Ausführungsbeispiels erläutert.

Es zeigt:

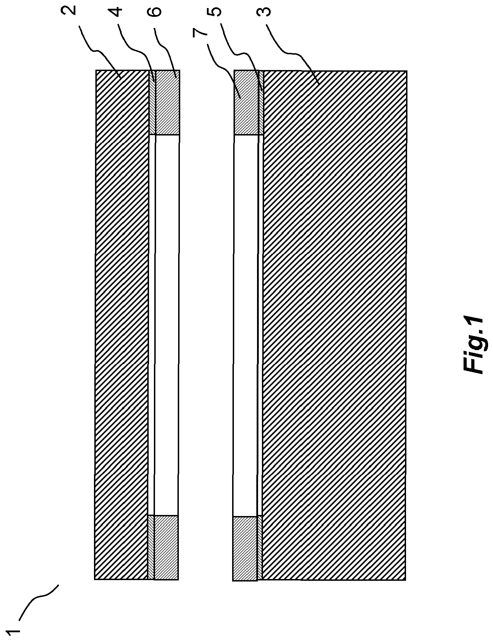

Fig. 1: Komponenten eines keramischen Drucksensors, welche mittels des erfindungsgemäßen Verfahrens gefügt werden.

Die in Fig 1 dargestellten Komponenten eines keramischen Drucksensors 1 umfassen eine kreisscheibenförmige Messmembran 2 einen kreisscheibenförmigen Grundkörper 3 aus Korund. Insbesondere die Messmembran kann hochreines Korund mit einer Reinheit von besser als 99,98 % aufweisen. Die Messmembran 1 und der Grundkörper 2 weisen, je nach Ausgestaltung beispielsweise einen Durchmesser von etwa 15 bis 25 mm auf. Der Durchmesser ist jedoch keine erfindungswesentliche Größe und kann beispielsweise nach messtechnischen Erfordernissen oder anderen Randbedingungen gewählt werden. Die Messmembran 1 und der Grundkörper 2 sind mittels eines Zr-Ni-Ti-Aktivhartlots in einem Hochvakuumlötprozess druckdicht zu verbinden.

Hierzu werden die zu fügenden Stirnflächen der Messmembran 1 und des Grundkörpers 2 zunächst jeweils bis auf einen ringförmigen Randbereich maskiert, um dann das Aktivhartlot für die Fügestelle in dem ringförmigen Randbereich mittels Gasphasenabscheidung zu präparieren.

Um die Reaktion mit dem jeweiligen Keramiksubstrat zu erleichtern, kann anstelle des unmittelbaren Abscheidens der Legierung mit einer Sollzusammensetzung zunächst ausschließlich eine aktive Komponente abgeschieden werden. Dies kann beispielsweise eine Titan-Schicht in einer Stärke von beispielsweise jeweils etwa 100 nm sein. Die Beschichtungen 4, 5 können beispielsweise in einem Sputterprozess mit einem reinen Ti-Target präpariert werden.

Anschließend kann jeweils auf dem ringförmigen, mit der aktiven Komponente vorbeschichteten Bereich der Messmembran und des Grundkörpers ein Teil des für die Stärke der Fügestelle erforderlichen Aktivhartlots abgeschieden werden. Die Aufteilung kann beispielsweise hälftig sein, wonach bei einer angestrebten Stärke der Fügestelle von beispielsweise etwa 10 μm jeweils eine ringförmige Schicht 6, 7 mit einer Stärke von etwa 5 μm auf der Messmembran und auf dem Grundkörper in der Sollzusammensetzung abgeschieden werden kann. Hierzu wird ein Target eingesetzt, welches die Legierung des Aktivhartlots in der Sollzusammensetzung enthält. Das Target kann beispielsweise pulvermetallurgisch hergestellt sein.

Um eine effiziente Abscheidungsrate mit hinreichend guter Kontrolle der Rate zu erzielen, wird bevorzugt eine Sputteranlage mit einem Hochleistungsmagnetron eingesetzt. Damit lassen sich kontrolliert Abscheidungsraten zwischen beispielsweise etwa 0,2 nm/s bis etwa 2 nm/s einstellen. Für das Abscheiden der 5 $\mu$m werden bei einer Abscheidungsrate von 2 mm/s dann 2500 s also knapp 42 Minuten benötigt.

Nach dem vollständigen Abscheiden des Aktivhartlots zum Bilden der Fügestelle werden die Messmembran 2 und der Grundkörper 3 mit den Aktivhartlotringen aufeinandergelegt und in einem Vakuumlötprozess bei etwa 900 °C miteinander druckdicht verbunden.

Vorzugsweise werden vor dem Abscheiden des Aktivhartlots (hier nicht dargestellte) Elektroden für einen kapazitiven Wandler des Drucksensors präpariert. Dies kann ebenfalls mittels Gasphasenabscheidung in einem Sputter-Verfahren erfolgen. Als Elektrodenmaterial ist beispielsweise Ta geeignet, welches in einer Stärke von beispielsweise 0,1 bis 0,2 $\mu$m abgeschieden wird. Eine bevorzugte Elektrodenanordnung kann beispielsweise eine Bildung eines Differentialkondensators ermöglichen, wozu auf der Stirnseite des Grundkörpers in dem von der ringförmigen Fügestelle zu umschließenden Bereich eine zentrale, kreisflächenförmige Messelektrode und eine diese umgebende, kapazitätsgleiche, ringförmige Referenzelektrode abgeschieden wird.

Die Messelektrode, die Referenzelektrode und die Fügestelle sind beim fertigen Drucksensor vorzugsweise gegeneinander elektrisch isoliert.

Auf der Membran wird vorzugsweise eine vollflächige Gegenelektrode präpariert, welche vorzugsweise beim fertigen Sensor mit der Fügestelle im galvanischen Kontakt steht.

## Patentansprüche

1. Verfahren zum Herstellen einer Verbindung zwischen zwei Keramikteilen, umfassend:

    Bereitstellen eines ersten Keramikteils und eines zweiten Keramikteils;
    Bereitstellen eines Aktivhartlotmaterials auf zumindest einem Oberflächenabschnitt zumindest eines der Keramikteile; und
    Erhitzen das Aktivhartlots in einem Vakuumlötprozess,
    wobei das gesamte Aktivhartlotmaterial zum Verbinden des ersten und des zweiten Keramikteils in der Weise bereitgestellt wird, dass zumindest ein Oberflächenabschnitt zumindest eines der Keramikteile, vorzugsweise beider Keramikteile, mittels einer Gasphasenabscheidung mit der Legierung des Aktivhartlots und/oder deren Komponenten beschichtet wird,

wobei die Gasphasenabscheidung ein Sputterverfahren umfasst, um die Komponenten des Aktivhartlots in die Gasphase zu überführen, wobei das Aktivhartlot mehrere Komponenten aufweist, und wobei in dem Sputterverfahren ein Sputtertarget verwendet wird, welches die Komponenten des Aktivhartlots enthält, wobei das Aktivhartlot eine Sollzusammensetzung aufweist, in welcher Komponenten $K_i$ des Aktivhartlots in einem Gewichtsprozentanteil $c_i$ vorliegen, und bei der die Differenz zwischen dem Wärmeausdehnungskoeffizienten des Aktivhartlots und dem Wärmeausdehnungskoeffizienten des Werkstoffs der Keramikteile, insbesondere bei gegebener Festigkeit der Fügestelle, ein Minimum aufweist, wobei das Sputtertarget die Komponenten des Aktivhartlots in Mengenverhältnissen $c_{i,\,Target}$ aufweist, die von der Sollzusammensetzung $c_{i,\,Soll}$ relative Abweichungen

$$d_i := \left| \left( c_{i,\,Target} - c_{i,\,Soll} \right) / c_{i,\,Soll} \right|$$

der einzelnen Komponenten aufweisen für die gilt: $d_i < 4\%$, vorzugsweise nicht mehr als 2% und besonders bevorzugt nicht mehr als 1%, wobei die keramischen Teile Korund aufweisen, wobei das Aktivhartlot eine Zr-Ni-Ti-Legierung aufweist, und wobei die eine Aktive Komponente Ti oder Zr umfasst, **dadurch gekennzeichnet, dass** für die Konzentrationen der Komponenten des Aktivhartlots in der Sollzusammensetzung gilt: $61 < c_{Zr} < 63,5$, $21,5 < c_{Ni} < 24$ und $14,5 < c_{Ti} < 15,5$.

2. Verfahren nach Anspruch 1, wobei der zumindest eine Oberflächenabschnitt des zumindest einen Keramikteils, mittels einer Gasphasenabscheidung zunächst nur mit einer aktiven Komponente des Aktivhartlots beschichtet wird.

3. Verfahren nach Anspruch 2, wobei die Beschichtung mit der mindestens einen aktiven Komponente eine Stärke von nicht weniger als 10 nm, insbesondere nicht weniger als 40 nm, und bevorzugt nicht weniger als 80 nm aufweist.

4. Verfahren nach Anspruch 2 oder 3, wobei die Beschichtung mit der mindestens einen aktiven Komponente eine Stärke von nicht mehr als 400 nm, insbesondere nicht mehr als 300 nm, und bevorzugt nicht mehr als 200 nm aufweist.

5. Verfahren nach einem der Ansprüche 2 bis 4, wobei die eine aktive Komponente zur Gasphasenabscheidung mittels eines Sputter-Verfahrens in die Gasphase gebracht wird, und wobei in dem Sputterverfahren ein Sputtertarget verwendet wird, welches nur die eine aktive Komponente enthält.

6. Verfahren nach einem der vorhergehenden Ansprüche, wobei der Lötprozess ein Vakuumlötprozess oder ein Lötprozess unter Schutzgas ist.

7. Verfahren nach einem der vorhergehenden Ansprüche, wobei das erste Keramikteil und das zweite Keramikteil entlang einer ringförmigen Fügestelle, welche einen Hohlraum zwischen dem ersten Keramikteil und dem zweiten Keramikteil umschließt, druckdicht verbunden werden, wobei das Aktivhartlot auf mindestens einem ringförmigen Oberflächenabschnitt eines Keramikteils abgeschieden wird, wobei ein von dem ringförmigen Oberflächenabschnitt umschlossener Bereich während des Abscheidens des Aktivhartlots maskiert ist.

8. Keramischer Drucksensor, welcher insbesondere nach einem Verfahren gemäß einem der Ansprüche 1 bis 7 erhältlich ist, wobei der Drucksensor ein erstes keramisches Teil und ein zweites keramisches Teil umfasst, und wobei das erste und das zweite keramische Teil mittels einer Fügestelle gefügt sind, die ein Aktivhartlot aufweist, wobei das Aktivhartlot in der Fügestelle eine Stärke von nicht mehr als 17 $\mu$m, bevorzugt nicht mehr als 14 $\mu$m und besonders bevorzugt nicht mehr als 12 $\mu$m aufweist, wobei die keramischen Teile Korund aufweisen, und wobei das Aktivhartlot eine Zr-Ni-Ti-Legierung umfasst, wobei das erste keramische Teil einen Grundkörper des Drucksensors umfasst, wobei das zweite keramische Teil die Messmembran des Drucksensors umfasst, und wobei die Messmembran mit dem Grundkörper entlang einer ringförmigen Fügestelle, welche das Aktivhartlot aufweist, druckdicht verbunden ist.

## Claims

1. Procedure designed to create a connection between two ceramic pieces, comprising:

   Provision of a first ceramic part and a second ceramic part;
   Provision of an active brazing solder on at least one surface section of at least one of the ceramic parts;
   and
   Heating of the active brazing solder in a vacuum solder process,
   wherein the entire active brazing solder material for connecting the first and second ceramic part is provided in such a way that at least one surface section of at least one of the ceramic parts, preferably of both ceramic parts, is coated with an alloy of the active brazing solder and/or of its components via chemical vapor deposition, wherein the chemical vapor deposition comprises a sputtering process to transform the components of the active brazing solder to the gas phase,
   wherein the active brazing solder has several components, and wherein the sputter process uses a sputter target which contains the components of the active brazing solder,
   wherein the active brazing solder has a specified composition in which components $K_i$ of the active brazing are present according to a weight percentage $c_i$, and wherein the difference between the thermal expansion coefficient of the active brazing solder and the thermal expansion coefficient of the material of the ceramic parts, particularly at the given stability of the joint, has a minimum,
   wherein the sputter target features the components of the active brazing solder in quantity ratios $c_{i,\ target}$, which present relative deviations

   $$d_i := |(c_{i,\ target} - C_{i,\ spec.}) / c_{i,\ spec.}|$$

   of the individual components from the specified composition $c_{i,\ set}$, for which the following applies: $d_i < 4\%$, preferably not more than 2% and particularly preferably not more than 1%,
   wherein the ceramic parts contain corundum,
   wherein the active brazing solder contains a Zr-Ni-Ti alloy, and
   wherein the active component is Ti or Zr,
   **characterized in that**
   the following applies for the concentrations of the components of the active brazing solder in the specified composition: $61 < c_{Zr} < 63.5$, $21.5 < C_{Ni} < 24$ and $14.5 < c_{Ti} < 15.5$.

2. Procedure as claimed in Claim 1, wherein the at least one surface section of the at least one ceramic part is initially only coated with one active component of the active brazing solder using chemical vapor deposition.

3. Procedure as claimed in Claim 2, wherein the coating with the at least one active component has a thickness of not less than 10 nm, particularly not less than 40 nm and preferably not less than 80 nm.

4. Procedure as claimed in Claim 2 or 3, wherein the coating with the at least one active component has a thickness of not more than 400 nm, particularly not more than 300 nm and preferably not more than 200 nm.

5. Procedure as claimed in one of the Claims 2 to 4, wherein the active component for chemical vapor deposition is transformed to the gas phase via a sputter process, and wherein the sputter process uses a sputter target that only contains the one active component.

6. Procedure as claimed in one of the previous claims, wherein the solder process is a vacuum solder process or a solder process under shielding gas.

7. Procedure as claimed in one of the previous claims, wherein the first ceramic part and the second ceramic part are connected in a pressure-tight manner along an annular joint which encloses a cavity between the first ceramic part and the second ceramic part, wherein the active brazing solder is deposited on at least one annular surface section of a ceramic part, wherein a section enclosed by the annular surface section is masked during the deposition of the active brazing solder.

8. Ceramic pressure sensor, which is obtainable particularly following a procedure as described in one of the Claims 1 to 7, wherein the pressure sensor has a first ceramic part and a second ceramic part, and wherein the first and the second ceramic part are joined by a joint which has an active brazing solder, wherein the active brazing solder in the joint has a strength of not more than 17 $\mu$m, preferably not more than 14 $\mu$m and particularly preferably not more than 12 $\mu$m, wherein the ceramic parts contain corundum, and wherein the active brazing solder comprises a Zr-Ni-Ti alloy, wherein the first ceramic part comprises a meter body of the pressure sensor, wherein the second ceramic part comprises the process isolating diaphragm of the pressure sensor, and wherein the process isolating diaphragm is connected in a pressure-tight manner to the meter body along an annular joint which has the active brazing solder.

## Revendications

1. Procédé destiné à la fabrication d'une liaison entre deux pièces en céramique, comprenant :

Mise à disposition d'une première pièce en céramique et d'une deuxième pièce en céramique ;
Mise à disposition d'une brasure active sur au moins une partie de la surface d'au moins une des pièces en céramique ;
et

Échauffement de la brasure active dans un processus de brasage sous vide,
pour lequel la totalité de la brasure active est mise à disposition pour l'assemblage de la première et de la deuxième pièce en céramique, de telle manière qu'une partie de la surface d'au moins l'une des pièces en céramique, de préférence des deux pièces en céramique, est revêtue au moyen d'un dépôt en phase vapeur avec l'alliage de la brasure active et/ou de ses composants,
pour lequel le dépôt en phase vapeur comprend un procédé de pulvérisation afin de transformer les composants de la brasure active en phase vapeur,
pour lequel la brasure active comprend plusieurs composants et pour lequel est utilisée, dans le procédé de pulvérisation, une cible de pulvérisation contenant les composants de la brasure active,
pour lequel la brasure active présente une composition théorique, dans laquelle les composants $K_i$ de la brasure active sont présents selon un pourcentage en poids $c_i$, et pour laquelle la différence entre le coefficient de dilatation thermique de la brasure active et le coefficient de dilatation thermique du matériau des pièces en céramique, notamment pour la résistance donnée du point d'assemblage, présente un minimum, la cible de pulvérisation présentant les composants de la brasure active selon des rapports de quantité $c_{i,\,cible}$, qui présentent des écarts relatifs

$$d_i := |(c_{i,\,cible} - c_{i,\,théor.}) / c_{i,\,théor.}|$$

des différents composants par rapport à la composition théorique $c_{i,\,théor.}$, écarts pour lesquels s'applique la règle suivante : $d_i < 4\,\%$, de préférence pas plus de 2 % et particulièrement de préférence pas plus de 1 %,
pour lequel les pièces en céramique contiennent du corindon,
pour lequel la brasure active présente un alliage de Zr-Ni-Ti, et
pour lequel le composant actif contient du Ti ou du Zr,
**caractérisé**
**en ce que** s'applique, pour les concentrations des composants de la brasure active dans la composition théorique, la relation suivante : $61 < c_{Zr} < 63,5$, $21,5 < c_{Ni} < 24$ et $14,5 < c_{Ti} < 15,5$.

2. Procédé selon la revendication 1, pour lequel l'au moins une partie de la surface de l'au moins une pièce en céramique est revêtue au moyen d'un dépôt en phase vapeur, dans un premier temps uniquement avec un composant actif de la brasure active.

3. Procédé selon la revendication 2, pour lequel le revêtement avec l'au moins un composant actif présente une épaisseur d'au moins 10 nm, notamment d'au moins 40 nm et, de préférence, d'au moins 80 nm.

4. Procédé selon la revendication 2 ou 3, pour lequel le revêtement avec au moins un composant actif présente une épaisseur d'au plus 400 nm, notamment d'au plus 300 nm et, de préférence, d'au moins 200 nm.

5. Procédé selon la revendication 2 à 4, pour lequel le composant actif utilisé pour le dépôt en phase vapeur est transformé en phase vapeur au moyen d'un procédé par pulvérisation, et pour lequel est utilisée, dans le procédé de pulvérisation, une cible de pulvérisation ne contenant que ce composant actif.

6. Procédé selon l'une des revendications précédentes, pour lequel le processus de brasage est un processus de brasage sous vide ou un processus de brasage sous gaz protecteur.

7. Procédé selon l'une des revendications précédentes, pour lequel la première pièce en céramique et la deuxième pièce en céramique sont assemblées de façon étanche à la pression le long d'un joint d'assemblage annulaire, lequel renferme un espace creux entre la première pièce en céramique et la deuxième pièce en céramique, la brasure active étant déposé sur au moins une partie de la surface annulaire d'une pièce en céramique, une zone de la partie de surface annulaire étant masquée pendant le dépôt de la brasure active.

8. Capteur de pression en céramique, lequel est disponible notamment d'après un procédé selon l'une des revendications 1 à 7, le capteur de pression comprenant une première pièce en céramique et une deuxième pièce en céramique, et la première pièce et la deuxième pièce en céramique étant assemblées au moyen d'un joint d'assemblage, qui présente une brasure active, la brasure active présentant dans le joint d'assemblage une épaisseur inférieure à 17 $\mu$m, de préférence inférieure à 14 $\mu$m et particulièrement de préférence inférieure à 12 $\mu$m, les pièces en céramique présentant du corindon, et la brasure active comportant un alliage de Zr-Ni-Ti, la première pièce en céramique comprenant un corps de base du capteur de pression, la deuxième pièce en céramique comprenant la membrane de mesure du capteur de pression, et la membrane de mesure étant reliée de façon étanche à la pression avec le corps de base, le long d'un joint d'assemblage annulaire, lequel présente la brasure active.

**Fig.1**

EP 2 632 875 B1

EP 2 632 875 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- FR 2751640 A1
- US 5351938 A
- EP 0490807 B1
- EP 0558874 B1
- EP 0988919 A1